# EUROPÄISCHE PATENTANMELDUNG

(11) **EP 3 726 309 A1**
(43) Veröffentlichungstag der Anmeldung: **21.10.2020**
(21) Anmeldenummer: 19170072.3
(22) Anmeldetag: 18.04.2019
(51) Int. Cl.: G05B 19/042, G06F 21/50

(54) **VERFAHREN UND SYSTEM ZUM ÜBERWACHEN EINES AKTUELLEN INTEGRITÄTSZUSTANDES EINES VERTEILTEN AUTOMATISIERUNGSSYSTEMS**

(71) Anmelder: Siemens Aktiengesellschaft, 80333 München (DE)
(72) Erfinder: Falk, Rainer, 85586 Poing (DE); Feist, Christian Peter, 80689 München (DE); Knierim, Christian, 81373 München (DE)

(57) **Zusammenfassung**

Zusammenfassend betrifft die vorliegende Erfindung ein Verfahren und ein System zum Überwachen eines aktuellen Integritätszustandes eines verteilten Automatisierungssystems. Das Automatisierungssystem (100) umfasst wenigstens eine Automatisierungskomponente (102). Zum Bestimmen des Integritätszustandes wird die Integritätszustandsinformation einer Automatisierungskomponente bestimmt und mit einer Integritätszustandsvorgabeinformation verglichen. Es wird eine Systemintegritätszustandsinformation bereitgestellt, die die Integritätsvergleichsergebnisse umfasst, die auf einer Ausgabeeinheit entsprechend dem Integritätszustand modifiziert dargestellt werden können. Zudem kann eine Alarmnachricht bereitgestellt werden, die die Anzeige einer Ausgabeeinheit entsprechend des Integritätszustandes modifiziert.

Diesbezüglich kann eine spezifische Integritätsüberwachung des verteilten Automatisierungssystems einem Anwender bereitgestellt werden. Zudem erhält der Anwender die Information, wo die Integritätsverletzung im verteilten Automatisierungssystem eingetreten ist. Zudem erhält der Anwender die Information, dass die auf einer Ausgabeeinheit dargestellten Informationen evtl. nicht mehr vertrauenswürdig sind.

## Beschreibung

Automatisierungssysteme bestehen aus einer Vielzahl (oder: Mehrzahl) von Automatisierungskomponenten, die mittels verschiedener Systeme überwacht werden müssen. Zur Überwachung werden komplexe Software-basierte Systeme oder Produktionsplanungssysteme verwendet, die aus einer Mehrzahl oder Vielzahl von Software-Komponenten oder Prozessen bestehen, die auf einem oder auf mehreren Systemen ausgeführt werden können. Für die Überwachungssysteme besteht ein Bedarf an einem Systemintegritätsschutz, da diese durch Angreifer auch der Gefahr einer Manipulation unterliegen.

Sicherheitsanforderungen für industrielle Automatisierungs- und Steuerungssysteme werden durch die Standards der Reihe IEC62443 definiert. Dabei werden auch Anforderungen an die Systemintegrität gestellt. Diese Anforderungen umfassen beispielsweise ein sicheres Starten, Integritätsprüfung von Programmcode und der Konfigurationsdaten. Der IndustrieSicherheits-Standard IEC62443-4.2 (Version Draft 4, Edit 2, February 2018) definiert Anforderungen an die Systemintegrität von Komponenten eines Automatisierungssystems. Anforderungen betreffen die Prüfung der Integrität zur Laufzeit und das Bereitstellen bzw. Melden einer Integritätsverletzung (CR3.4 Software and Information Integrity), der Integritätsschutz des Startprozesses (CR3.14 Integrity of Boot Process) und eine Möglichkeit, Informationen für eine Bestandserfassung bereitzustellen (CR7.8 Control System Inventory).

Die Geräteintegrität kann beispielsweise durch Validierung der Software, der Firmware und der Konfiguration während des Hochfahrens (power-on-reset) geschützt werden. Zudem können die Software, Firmware, und die Konfiguration während der Laufzeit überprüft werden. Ferner kann eine mögliche Angriffsfläche reduziert werden, um das Ausnutzen möglicher Schwachstellen zu unterbinden.

Weiterhin sind, insbesondere für Rechenzentren, Software-Werkzeuge bekannt, um die Konformität (Compliance) von Server-Konfigurationen zu überwachen. Dadurch wird automatisch geprüft, im Allgemeinen mittels eines installierten Agenten, ob die Konfiguration eines Servers den definierten Konformitäts-Regeln entspricht.

Zudem sind "Intrusion Detection Systeme" (IDS) bekannt, um einen Angriff auf ein IT-System zu erkennen ("Host-based Intrusion Detection System", "Network-based Intrusion Detection"). Dabei werden Informationen eines IT-Systems überwacht. Für eine Umsetzung eines IDS werden verschiedene Strategien verfolgt. Beispielsweise wird bei einer "Statistical anomaly-based detection" das erwartete Verhalten eines IT-Systems angelernt. Jede Abweichung wird als ein Angriff gemeldet. Bei einer "Signature-based detection" werden bekannte Angriffsmuster gesucht. Bei einer "Stateful protocol analysis detection" wird überprüft, ob ein Kommunikationsprotokoll, wie es spezifiziert wurden ist, abläuft.

Ferner sind Angriffserkennungs-Werkzeuge ("Host-based Intrusion Detection Systeme", HIDS) bekannt, die die Integrität eines Computer-Systems überprüfen (z.B. "File System Integrity" oder ausgeführte Prozesse) und das Ergebnis einem Überwachungs-Server melden, beispielsweise "Open Source HIDS Security" (OSSEC). Sicherheitskritische Ereignisse eines einzelnen Regelwerkes (Policy) können dabei zudem unterschiedliche Kategorien (Level) zugeordnet werden.

Bei bekannten Systemen zur Integritätsüberwachung (HIDS) wird die Übereinstimmung mit einer Referenzinformation geprüft. Im Wesentlichen wird lediglich eine Information "Gut", "OK" oder "Schlecht", "Nicht OK" ermittelt, oder das Ereignis wird kategorisiert, um für einzelne Kategorien entsprechende Maßnahmen einleiten zu können. Eine solche grobe Integritäts-Information ist in der Praxis aber nicht unbedingt hilfreich. Ebenso besteht bei bekannten HIDS die Möglichkeit eine detaillierte Information, wie die Integritätsverletzung erkannt wurde, beispielsweise welche Datei einen ungültigen Hash-Wert aufweist. Diese wäre für einen Anwender nicht hilfreich (höchstens für einen Entwickler beim Hersteller eines Gerätes oder es könnte eine Software-Komponente eine solche Meldung sinnvoll interpretieren). Integritätsinformationen müssen somit für unterschiedliche Anwender verständlich bereitgestellt werden können, insbesondere auf einer vertrauenswürdigen Anzeige dargestellt werden können.

Anzeigen, beispielsweise Display oder Anzeigepanels werden bei Maschinen und Leitständen verwendet, um eine Maschine bzw. ein Automatisierungssystem bzw. ein cyber-physisches System zu überwachen, und um ggf. Gegenmaßnahmen durch einen Betreiber einzuleiten. Dabei ist wichtig, dass tatsächlich die korrekte Information dargestellt wird. Ansonsten kann der Fall eintreten, dass ein Bediener nicht oder falsch reagieren würde. Somit besteht auch ein Bedarf an einer vertrauenswürdigen Anzeige für Maschinen und Leitstände.

Bei Mobiltelefonen ist ein "Trusted Display" bekannt. Dabei kann ein "Secure Element" ("Trusted Execution Environment" oder ein separater FPGA) die Display-Ausgabe unabhängig von dem Hauptprozessor/Android angesteuert werden. Dadurch können sensible Informationen des "Secure Elementes" vertrauenswürdig angezeigt werden.

Weiterhin ist ein "Network Admission"/"Access Control" (NAC) bekannt. Bei einem "Network Admission Control" wird beim Zugriff auf ein Netzwerk überprüft, ob der zugreifende Client konform zu einer Sicherheitsregel ("Security-Policy") konfiguriert ist, beispielsweise ob der Virenscanner aktiv und aktuell ist oder ob der Patchlevel aktuell ist. Andernfalls wird der Netzwerkzugang abgewiesen, oder das Gerät mit einem Quarantäne-Netzwerk verbunden.

Bei einem "Trusted Platform Modul" (TPM) ist bekannt, dass der aktuelle Wert eines Plattformkonfigurationsregisters (PCR) attestiert, d.h. gegenüber Dritten bestätigt werden kann. Bei dem Betriebssystem Linux ist die darauf basierende "Integrity Measurement Architecture" (IMA) bekannt. Bei der IMA kann gegenüber einem Dritten bestätigt werden, welche Softwaremodule geladen wurden, oder in welchem Zustand sich gewisse Teile des Dateisystems befinden.

Es ist daher Aufgabe der vorliegenden Erfindung, ein Verfahren und ein System zum Überwachen eines aktuellen Integritätszustandes eines verteilten Automatisierungssystems bereitzustellen.

Diese Aufgabe wird erfindungsgemäß durch ein Verfahren und ein System zum Überwachen eines aktuellen Integritätszustandes eines verteilten Automatisierungssystems mit den in den Patentansprüchen 1 und 14 angegebenen Merkmalen gelöst.

Die Erfindung schafft demnach ein Verfahren zum Überwachen eines aktuellen Integritätszustandes eines verteilten Automatisierungssystems, das wenigstens eine Automatisierungskomponente aufweist, mit den Schritten:
Erfassen wenigstens einer Integritätszustandsinformation der wenigstens einen Automatisierungskomponente des verteilten Automatisierungssystems;
Vergleichen der erfassten Integritätszustandsinformation der Automatisierungskomponente mit wenigstens einer bereitgestellten Integritätszustandsvorgabeinformation für die wenigstens eine Automatisierungskomponente; und Überwachen des aktuellen Integritätszustandes der wenigstens einen Automatisierungskomponente des verteilten Automatisierungssystems basierend auf dem Integritätsvergleichsergebnisses des Vergleichsschrittes.

Im Sinne der vorliegenden Erfindung ist unter einer Integritätszustandsinformation eine Information über den aktuellen Zustand einer Automatisierungskomponente zu verstehen. Diese wird im laufenden Betrieb der Automatisierungskomponente ermittelt. Beispielsweise umfasst die Information die aktuelle Version der Hardware, Firmware, Software und ihrer Bibliotheken, und/oder deren Laufzeit und Verwendung dieser. Es kann dabei eine Integritätszustandsinformation einer einzelnen Automatisierungskomponente des verteilten Automatisierungssystems ermittelt werden, oder eine Mehrzahl von Integritätszustandsinformationen einer Mehrzahl von Automatisierungskomponenten des verteilten Automatisierungssystems, oder eine Mehrzahl von Integritätszustandsinformationen aller Automatisierungskomponenten des verteilten Automatisierungssystems.

Zudem ist im Sinne der vorliegenden Erfindung unter der erfassten Integritätszustandsvorgabeinformation der Zustand zu verstehen, den eine Automatisierungskomponente aufweisen sollte, beispielsweise der Zustand, als die Automatisierungskomponente in Betrieb genommen wurde.

Es kann ein Vergleich mit einer Mehrzahl von Integritätszustandsvorgabeinformationen erfolgen, um zu ermitteln, welche Integritätszustandsvorgabeinformationen aktuell erfüllt werden. Dies ermöglicht, aus betrieblicher Sicht unterschiedlich kritische Integritätszustandsvorgaben zu unterscheiden. Abhängig davon, welche der Mehrzahl von Integritätszustandsvorgabeinformationen erfüllt sind, kann automatisch der Betrieb des verteilten Automatisierungssystems und/oder von einzelnen Automatisierungskomponenten des verteilten Automatisierungssystems eingeschränkt oder unterbunden werden. Ein eingeschränkter Betrieb kann z.B. dadurch erfolgen, dass eine Werkzeugmaschine mit verringerter Drehzahl oder verringertem Druck oder verringerter Leistung betrieben wird. Weiterhin ist es möglich, einem Bediener anzuzeigen, welche der Mehrzahl von Integritätszustandsvorgabeinformationen erfüllt ist. Dadurch kann ein Bediener einfach die Kritikalität der Integritätsverletzung einschätzen und geeignet reagieren.

Es versteht sich, dass das Automatisierungssystem mit mehreren verschiedenen Systemen (Server, Gateways) und Automatisierungskomponenten kommuniziert oder kommunizieren kann. In den einzelnen mit dem Automatisierungssystem verbunden Systemen und Automatisierungskomponenten können Softwarekomponenten und/oder Prozesse ausgeführt werden, deren Integritätszustand überwacht wird.

Der vorliegenden Erfindung liegt die Kenntnis zu Grunde, dass ein Bedarf an einem Systemintegritätsschutz für ein verteiltes Automatisierungssystem besteht.

In vorteilhafter Weise können die von dem Automatisierungssystem, beispielsweise in einem Kraftwerk, einer Werkzeugmaschine, einem 3D-Drucker oder einer Produktionsstraße, bereitgestellten und angezeigten Informationen derart zur Verfügung gestellt werden, dass der Anwender entsprechende Tätigkeiten zur Problemlösung ableiten kann bzw. Handlungstätigkeiten bereitgestellt bekommt. Der Anwender bekommt diesbezüglich nicht, wie im Stand der Technik bekannten Systemen nur eine Rückmeldung über den Systemzustand ("Gut" oder "Schlecht"). Vielmehr wird dem Anwender insbesondere die Zustandsvorgabe (Policy) aufgezeigt, die durch die Automatisierungskomponente zum aktuellen Zeitpunkt nicht erfüllt wird. Diesbezüglich hat der Anwender einen aktuellen Kenntnisstand über die Automatisierungskomponente und/oder das Automatisierungssystem und kann gezielt Aktionen triggern, um die Integrität wiederherzustellen.

Zudem kann bei einer bestimmten Integritätsverletzung, die Automatisierungskomponente und/oder das Automatisierungssystem in einen sicheren Zustand versetzt werden, um das Risiko zu minimieren, dass die Automatisierungskomponente und/oder das Automatisierungssystem beschädigt werden. Somit ist es nicht nötig, das ganze Automatisierungssystem herunterzufahren bzw. auszuschalten, sondern können gezielt betroffene Automatisierungskomponenten entsprechend gesteuert werden. Ferner ist es nicht notwendig, die mit einer Integritätsverletzung behaftete Automatisierungskomponente vollständig zu deaktivieren. Auf Basis der vorliegenden Erfindung kann eine Abschätzung zur Aktivitätsreduzierung der Automatisierungskomponente erfolgen, was nur ein teilweises Deaktivieren bzw. ein eingeschränktes Arbeiten der Automatisierungskomponente ermöglicht.

Weiterhin vorteilhaft kann ein Anbieter eines Softwaresystems eine spezifische Integritätsüberwachung des gesamten Automatisierungssystems vorbereiten und Anwendern bereitstellen. Diese spezifische Lösung zur Überwachung der Installation eines verteilten Software-basierten Systems ermöglicht, die Integrität eines verteilten Automatisierungssystems gemäß mehreren Integritäts-Vorgaben zu prüfen.

Vorteilhafte Ausführungsformen und Weiterbildungen ergeben sich aus den Unteransprüchen, sowie aus der Beschreibung unter Bezugnahme auf die Figuren.

In einer vorteilhaften Ausführungsform umfasst das verteilte Automatisierungssystem ein "Supervisory Control and Data Acquisition" (SCADA) - System. Ein SCADA-System ist ein System zum Überwachen und Steuern technischer Prozesse in einem Automatisierungssystem mittels eines Computer-Systems. SCADA bezieht sich auf zentrale/dezentrale Systeme, die die gesamte Installation überwachen, visualisieren, sowie steuern und regeln. Der größte Teil der Regelung wird automatisch durch Fernbedienungsterminals oder durch Speicherprogrammierbare Steuerungen (SPS) beziehungsweise Level-1-Automation durchgeführt. Die Aufgabe der Level-2-Automation ist es, die Funktion der Level-1-Automation zu optimieren, sowie Stellgrößen und Sollwerte auszugeben. Die Level-3-Automation dient der Planung, Qualitätssicherung und Dokumentation. Die Datenerfassung beginnt gewöhnlich mit dem Level 1 und enthält die Koppelung an Sensoren, Messgeräte und Statusinformationen wie Schalterstellungen, die von einer Automatisierungskomponente, z.B. einer Speicherprogrammierbaren Steuerung oder dem SCADA-System, erfasst werden. Die Daten werden dann in einer benutzerfreundlichen Darstellung präsentiert und ermöglichen es, steuernd in den Prozess einzugreifen. SCADA-Systeme implementieren typischerweise eine verteilte Datenbasis, die Datenpunkte beinhaltet. Ein Datenpunkt enthält einen Ein- oder Ausgangswert, der durch das System überwacht und gesteuert wird. Ein physischer Datenpunkt stellt einen Eingang oder Ausgang dar, während ein berechneter Punkt durch mathematische Operationen aus dem Zustand des Systems hervorgeht. Normalerweise werden Datenpunkte als eine Kombination von Werten mit Zeitstempel behandelt. Eine Serie von Datenpunkten ermöglicht die historische Auswertung. Die Kommunikation innerhalb von SCADA-Systemen erfolgt auf der Basis von beispielsweise TCP- oder UDP-basierten Internettechniken. Mit dem SCADA-System werden die technischen Prozesse in einem Automatisierungssystem, mittels einer Software, beispielsweise WinCC überwacht. "Windows Control Center" (WinCC) ist ein Computerbasiertes Prozessvisualisierungssystem, das als ein eigenständiges SCADA-System oder als Mensch-Maschine-Schnittstelle für Prozessleitsystem wie SIMANTIC PCS 7 eingesetzt wird.

In einer weiteren vorteilhaften Ausführungsform wird in einem weiteren Schritt eine Systemintegritätszustandsinformation des verteilten Automatisierungssystems bereitgestellt, die die Integritätsvergleichsergebnisse für mehrere oder alle Automatisierungskomponenten des Automatisierungssystems umfasst.

Die Übereinstimmung mit den einzelnen Integritätszustandsvorgabeinformationen ist jeweils separat ermittelbar. Die Systemintegritätszustandsinformation gibt dabei an, welche Integritätszustandsvorgabeinformationen erfüllt bzw. verletzt sind. In einer weiteren Ausführungsform kann in der Systemintegritätszustandsinformation die Integritätszustandsvorgabeinformation angegeben werden, beispielsweise der Hash-Wert, die Versionsnummer, das Änderungsdatum.

In einer weiteren vorteilhaften Ausführungsform wird die bereitgestellte Systemintegritätszustandsinformation kryptografisch geschützt übertragen. Die Systemintegritätszustandsinformation ist vorzugsweise kryptografisch geschützt, beispielsweise durch eine digitale Signatur, eine kryptografische Prüfsumme oder durch die Übertragung über eine kryptografisch geschützte Kommunikationsverbindung, beispielsweise TLS oder IPSec. In vorteilhafter Weise kann somit eine Manipulation der Systemintegritätszustandsinformation vermieden werden. Weiterhin vorteilhaft ist, dass das System zum Überwachen eines aktuellen Integritätszustandes sicher gegen Manipulation geschützt werden kann. Somit kann eine zielgerichtete Manipulation bestimmt werden.

In einer weiteren vorteilhaften Ausführungsform wird die Systemintegritätszustandsinformation in einem Speichermedium gespeichert. Beispielsweise kann die Systemintegritätszustandsinformation in einem Historian oder einem Produktdatenmanagementsystem (PDM) abgelegt werden. Ein Historian ist ein Block-Server-Prinzip, das anfallende Produktionsschritte für eine Auswertung archiviert. In vorteilhafter Weise kann nachvollzogen werden, welcher Konfigurationsstand beispielsweise während der Produktion eines bestimmten Batches vorlag. Ferner kann überprüft werden, dass der Konfigurationsstand am Ende des Batches noch identisch ist zu dem, wie er am Anfang des Batches war. Dadurch kann nachgewiesen werden, dass ein bestimmter Produktionsvorgang bzw. Batch unter einer Konfiguration produziert wurde, die bestimmten Compliance-Vorgaben genügt.

In einer weiteren vorteilhaften Ausführungsform wird eine Alarmnachricht entsprechend des überwachten aktuellen Integritätszustandes der Automatisierungskomponente des verteilten Automatisierungssystems bereitgestellt. Eine Alarmnachricht kann in Abhängigkeit von der Kombination erfolgen, welche Policy oder Policies erfüllt bzw. verletzt sind. In einer weiteren Ausführungsform kann ein Produktionsauftrag abhängig von der vorliegenden Kombination von erfüllten Systemintegritätszustandsvorgabeinformationen (Policy) ausgewählt werden. Beispielsweise kann ein weniger kritischer Produktionsauftrag durchgeführt werden, obwohl eine bestimmte, relativ unkritische Abweichung erkannt wurde. Somit können beispielsweise schlechtere Qualität und/oder höhere Prozesszeit und Prozesskosten vermieden werden.

In einer weiteren vorteilhaften Ausführungsform wird eine automatische Reaktion entsprechend des überwachten aktuellen Integritätszustandes der Automatisierungskomponente des verteilten Automatisierungssystems bereitgestellt, umfassend einen Neustart der Automatisierungskomponente. In vorteilhafter Weise kann die Integritätsverletzung der Automatisierungskomponente nach dem Neustart behoben werden.

In einer weiteren vorteilhaften Ausführungsform wird eine automatische Reaktion entsprechend des überwachten aktuellen Integritätszustandes der Automatisierungskomponente des verteilten Automatisierungssystems bereitgestellt, umfassend einen Not-Aus der Automatisierungskomponente oder des verteilten Automatisierungssystems. In vorteilhafter Weise kann durch den Not-Aus der Automatisierungskomponenten ein Übergreifen der Beschädigung auf das gesamte Automatisierungssystem oder eine Beeinflussung des Automatisierungssystems unterbunden werden. Die Not-Aus-Funktionalität einer als manipuliert erkannten Automatisierungskomponente kann in einer Variante dadurch realisiert werden, dass deren Stromversorgung abgeschaltet wird, dass deren Netzwerkverbindung zu einem Steuernetzwerk unterbrochen wird, oder indem durch Öffnen von Schaltkontakten ein Zugriff auf mit der betroffenen Automatisierungskomponente verbundenen Sensoren / Aktuatoren unterbrochen wird. Anstatt oder zusätzlich zu einer Not-Aus-Funktionalität ist es auch möglich, einen eingeschränkten Betriebsmodus zu aktivieren, z.B. indem die Leistung oder die Drehzahl eines Antriebs begrenzt wird.

In einer weiteren vorteilhaften Ausführungsform wird eine automatische Reaktion entsprechend des überwachten aktuellen Integritätszustandes der Automatisierungskomponente des verteilten Automatisierungssystems bereitgestellt, umfassend ein Aktivieren eines visuellen und/oder akustischen Alarmsignals. In vorteilhafter Weise wird einem Anwender die Integritätsverletzung einer Automatisierungskomponente und/oder des Automatisierungssystems bereitgestellt, wodurch dieser entsprechende und/oder notwendige Maßnahmen umsetzen kann, um die Integritätsverletzung zu beheben. Das visuelle Alarmsignal kann auf einem Anzeigeelement, beispielsweise auf einem Display oder Touch-Display angezeigt werden. In einer Ausführungsform werden die Automatisierungskomponenten und/oder deren zugeordnete Integritätszustandsvorgabeinformation auf dem Anzeigeelement dargestellt und bei einer Integritätsverletzung in einer abweichenden Darstellung als bei vorhandener Integrität dargestellt. In einer Ausführungsform kann ein Symbol beispielsweise mit unterschiedlicher und/oder wechselnder Anzeigefrequenz und/oder Farbe auf dem Anzeigeelement eingeblendet werden. In einer weiteren Ausführungsform kann eine Warnlampe aktiviert werden. Das akustische Alarmsignal kann als ein intensiver, hochfrequenter Laut, der periodisch moduliert werden kann, ausgebildet sein.

In einer weiteren vorteilhaften Ausführungsform wird eine automatische Reaktion entsprechend des überwachten aktuellen Integritätszustandes der Automatisierungskomponente des verteilten Automatisierungssystems bereitgestellt, umfassend ein Zurücksetzen der Automatisierungskomponente. In vorteilhafter Weise kann die Automatisierungskomponente, insbesondere eine Softwarekomponente und ein Prozess in den zuletzt bekannten Zustand ohne Integritätsverletzung bzw. in einen eingefrorenen Zustand versetzt werden.

In einer weiteren vorteilhaften Ausführungsform weist die bereitgestellte Integritätszustandsvorgabeinformation der Automatisierungskomponente Teile mit unterschiedlichen Lebenszyklen auf. Der Lebenszyklus beinhaltet hierbei den Zeitpunkt, an dem der aktuelle Wert der Integritätszustandsvorgabeinformation festgelegt oder eingefroren wird bzw. durch wen der aktuelle Wert der Integritätszustandsvorgabeinformation festgelegt oder eingefroren wird, um auf dieser Basis einen Vergleich durchzuführen. Dies hat den Vorteil, dass unterschiedliche Prüfungen unabhängig voneinander definiert werden können.

Beispielsweise kann die Integritätszustandsvorgabeinformation von einem Hersteller definiert werden, um zu prüfen, ob die Originalsoftware installiert ist und ob diese korrekt installiert wurde (zulässiges "Deployment"). Dabei wird die grundsätzliche Zulässigkeit der Installation aus der Herstellersicht geprüft, d.h. ob aus Anbietersicht die Art der Installation zulässig ist. Es kann in vorteilhafter Weise überprüft werden, ob diese einen vom Hersteller freigegebenen Versionsstand darstellt.

Beispielsweise kann die Integritätszustandsvorgabeinformation von einem Systemintegrator definiert werden, um zu prüfen, ob die Installation der Planung entspricht. Es kann beispielsweise überprüft werden, ob auf allen Systemen die vorgesehenen Konfigurationsdaten (Projektierungsdaten) vorliegen. Dadurch kann beispielsweise ein Systemintegrator die von ihm aufgesetzte Konfiguration "einfrieren", bzw. als Referenz-Deployment-Fingerprint definieren. In vorteilhafter Weise kann erkannt werden, ob die Installation noch dem geplanten Stand entspricht.

Beispielsweise kann die Integritätszustandsvorgabeinformation von einem Betreiber definiert werden, um zu prüfen, ob die Installation seit Abnahme oder Freigabe geändert wurde. Es kann jede Abweichung gegenüber dem Installationszeitpunkt erkannt werden. Weiterhin können zu anderen Zeitpunkten, beispielsweise auf Anforderung oder automatisch, z.B. bei einem Software-Update oder bei Start und Ende eines Produktions-Batchs, ein Referenz-Deployment-Fingerprint generiert werden.

Beispielsweise kann die Integritätszustandsvorgabeinformation von einem Betreiber definiert werden, um zu prüfen, ob die Installation eines Industriesicherheits-Standards eine bestimmte Sicherheitsstufe erfüllt (z.B. IEC62443 SL2, IEC62443 SL3, branchenspezifische, regionale oder betreiberspezifische Sicherheitsstandards, z.B. für Energienetze, Öl und Gas, Bahnindustrie), regulative Mindestanforderungen.

Beispielsweise kann die Integritätszustandsvorgabeinformation von einem Servicetechniker definiert werden, um zu prüfen, ob die Installation seit dem letzten Service modifiziert wurde, beispielsweise durch den Anlagenbetreiber selbst.

Beispielsweise kann die Integritätszustandsvorgabeinformation durch eine IT-Abteilung definiert werden, um zu prüfen, ob die Vorgaben der internen IT erfüllt sind. Dabei können verbindliche Mindestanforderungen (Governance, Updaten, Passwortänderungen, Virenscanneraktualität) und technische Wunschvorgaben unterschieden werden.

In einer weiteren vorteilhaften Ausführungsform umfasst die bereitgestellte Integritätszustandsvorgabeinformation eine Mehrzahl oder eine Vielzahl an Regeln, aber wenigstens zwei Regeln. Dies hat den Vorteil, dass eine Automatisierungskomponente in einzelne Aspekte aufgeteilt und für die jeweiligen Aspekte entsprechende Regeln hinterlegt werden können. Somit kann sehr detailliert festgestellt werden, welcher Aspekt der Automatisierungskomponente einer Integritätsverletzung unterliegt und entsprechende Handlungsanweisungen vorgenommen werden. So kann z.B. ein erster Aspekt eine Steuerungsfunktionalität der Automatisierungskomponente betreffen, ein zweiter Aspekt eine Überwachungsfunktionalität, ein dritter Aspekt eine Safety-Funktionalität, und ein vierter Aspekt eine Diagnosefunktionalität.

In einer weiteren vorteilhaften Ausführungsform umfasst die bereitgestellte Integritätszustandsvorgabeinformation wenigstens eine Automatisierungskomponentenversion. Unter der Automatisierungskomponentenversion ist die aktuell installierte Version, beispielsweise der Software oder des laufenden Prozesses zu verstehen. Hierbei erfolgt ein Vergleich zwischen der laufenden Version und der eingefrorenen und erwarteten Version. Durch eine fehlende Übereinstimmung kann eine Systemintegritätszustandsinformation bereitgestellt werden.

In einer weiteren vorteilhaften Ausführungsform umfasst die bereitgestellte Integritätszustandsvorgabeinformation wenigstens Soll-Konfigurationsdaten der Automatisierungskomponente. Die Konfigurationsdaten entsprechenden der gewünschten Konfiguration. Wird eine Abweichung von der gewünschten Konfiguration bestimmt, kann eine Systemintegritätszustandsinformation bereitgestellt werden.

In einer weiteren vorteilhaften Ausführungsform umfasst die bereitgestellte Integritätszustandsvorgabeinformation wenigstens Mindestanforderungen an ein Sicherheitslevel. Wird eine Abweichung von der gewünschten Mindestanforderung an ein Sicherheitslevel bestimmt, kann eine Systemintegritätszustandsinformation bereitgestellt werden.

In einer weiteren vorteilhaften Ausführungsform ist die bereitgestellte Integritätszustandsvorgabeinformation wenigstens teilweise fest vorgebbar. Die Integritätszustandsvorgabeinformation kann derart eingerichtet werden, dass diese durch einen Hersteller mit einer Hersteller-Integritätspolicy fest vorgegeben wird.

In einer weiteren vorteilhaften Ausführungsform ist die bereitgestellte Integritätszustandsvorgabeinformation wenigstens teilweise konfigurierbar. Die Integritätszustandsvorgabeinformation kann derart eingerichtet werden, dass diese beispielsweise entsprechend einem Planungsstand konfigurierbar ist.

In einer weiteren vorteilhaften Ausführungsform wird die bereitgestellte Integritätszustandsvorgabeinformation wenigstens teilweise durch ein angelerntes Modell bereitgestellt. Die Integritätszustandsvorgabeinformation kann derart eingerichtet werden, dass diese beispielsweise durch ein Installer-Script im laufenden Betrieb angelernt werden kann. In einer Ausführungsform können die Integritätszustandsvorgabeinformation in einem Modell hinterlegt werden bzw. kann das Modell strukturiert mit Integritätszustandsvorgabeinformation und entsprechenden Verlinkungen angereichert werden.

In einer Ausführungsform kann eine Integritätszustandsvorgabeinformation (Referenz-Policy) nur durch Berechtigte geändert werden. Die Integritätszustandsvorgabeinformationen sind unabhängig voneinander aktualisierbar bzw. freigebbar. Zudem ist es möglich, dass eine neue, geänderte Integritätszustandsvorgabeinformation freigegeben werden kann. Unter einem Freigeben ist zu verstehen, dass ein Administrator eine Integritätszustandsvorgabeinformation aktualisiert. Diese muss in einem weiteren Schritt von einem Sicherheitsverantwortlichen freigegeben werden, bevor diese für das Überwachen des verteilten Automatisierungssystems übernommen werden kann.

In einer weiteren vorteilhaften Ausführungsform wird der Integritätszustand von installierten Automatisierungskomponenten und/oder von ausgeführten Automatisierungskomponenten des verteilten Automatisierungssystems während der Laufzeit detektiert. Manipulationen oder Beschädigungen an den Automatisierungskomponenten können während der Laufzeit bestimmt und Informationen zu einer eventuelle Integritätsverletzung bereitgestellt werden.

In einer weiteren vorteilhaften Ausführungsform wird der Integritätszustand des verteilten Automatisierungssystems manuell detektiert. Die Überwachung des Integritätszustands kann manuell gestartet und durchgeführt werden, wenn beispielsweise von einer Manipulation und/oder eine Integritätsverletzung auszugehen ist.

In einer weiteren vorteilhaften Ausführungsform wird der Integritätszustand des verteilten Automatisierungssystems automatisch detektiert. Die Überwachung des Integritätszustandes kann automatisch gestartet bzw. automatisch erfolgen und/oder durchgeführt werden.

In einer weiteren vorteilhaften Ausführungsform wird der Integritätszustand des verteilten Automatisierungssystems periodisch detektiert. Die Überwachung des Integritätszustandes kann periodisch in konfigurierbaren Intervallen gestartet und durchgeführt werden. Dies hat den Vorteil, dass eine kontinuierliche Überwachung des Integritätszustands der Automatisierungskomponente erfolgt. In einer Variante wird der Integritätszustand zu zufällig gewählten Zeitpunkten, d.h. randomisiert, ermittelt. Dies erschwert eine zielgerichtete Manipulation der Integritätszustandserfassung durch einen Angreifer.

Die Erfindung schafft ferner ein System zum Überwachen eines aktuellen Integritätszustandes eines verteilten Automatisierungssystems mit den in Anspruch 14 angegebenen Merkmalen.

Die Erfindung schafft demnach ein System zum Überwachen eines aktuellen Integritätszustandes eines verteilten Automatisierungssystems, das wenigstens eine Automatisierungskomponente aufweist, umfassend:
zumindest eine Erfassungseinheit, die ausgebildet ist, wenigstens eine Integritätszustandsinformation der Automatisierungskomponente des verteilten Automatisierungssystems zu erfassen;
eine Vergleichseinheit, die ausgebildet ist, die erfasste Integritätszustandsinformation der Automatisierungskomponente mit wenigstens einer bereitgestellten Integritätszustandsvorgabeinformation für die Automatisierungskomponente zu vergleichen, und eine Überwachungseinheit, die ausgebildet ist, den aktuellen Integritätszustand der Automatisierungskomponente des verteilten Automatisierungssystems basierend auf dem Integritätsvergleichsergebnisses der Vergleichseinheit zu überwachen.

Weiterhin ist es möglich, jeweils zumindest eine Integritätszustandsinformation einer Mehrzahl von Automatisierungskomponenten des verteilten Automatisierungssystems zu erfassen und diese jeweils mit einer jeweils zugeordneten Integritätszustandsinformation zu vergleichen. In einer anderen Variante ist es möglich, jeweils zumindest eine Integritätszustandsinformation einer Mehrzahl von Automatisierungskomponenten des verteilten Automatisierungssystems zu erfassen, eine Integritätszustandsinformation des verteilten Automatisierungssystems abhängig von den ermittelten Integritätszustandsinformation der Mehrzahl von Automatisierungskomponenten zu ermitteln, und die ermittelte Automatisierungssystem- Integritätszustandsinformation mit wenigstens einer Integritätszustandsvorgabeinformation zu vergleichen.

In einer vorteilhaften Ausführungsform des Systems umfasst das System eine Ausgabeeinheit, die ausgebildet ist, den aktuellen Integritätszustand der Automatisierungskomponente des verteilten Automatisierungssystems bereitzustellen. In vorteilhafter Weise kann über die Ausgabeeinheit die Systemintegritätszustandsinformation bereitgestellt werden, die die Integritätsvergleichsergebnisse für alle Automatisierungskomponenten bzw. die einzelnen Aspekte der Automatisierungskomponenten umfasst. In einer Ausführungsform ist die Ausgabeeinheit als ein Display oder als ein Touch-Display ausgebildet. Auf dem Display können die Integritätsvergleichsergebnisse, umfassend die erfüllten oder nicht erfüllten Integritätszustandsvorgabeinformation mit beispielsweise einem Symbol und/oder in unterschiedlichen Farben abgebildet werden. In einer Ausführungsform ist die Ausgabeeinheit ein separates Display, beispielsweise ein Monitor oder Panel, dass über eine Schnittstelle mit dem System kommuniziert.

In einer vorteilhaften Ausführungsform des Systems ist die Ausgabeeinheit ferner ausgebildet, Systeminformationen des verteilten Automatisierungssystems entsprechend dem empfangenen aktuellen Integritätszustand der Automatisierungskomponente modifiziert bereitzustellen. In Abhängigkeit der Art der Integritätsverletzung (Schweregrad oder betroffene Komponenten) können die Systeminformation modifiziert (z.B. gelb oder rot, betroffene Anzeigebereiche oder Elemente) angezeigt werden, um eine Integritätsverletzung visuell schneller und genauer zu erkennen.

In einer vorteilhaften Ausführungsform des Systems umfasst die Ausgabeeinheit eine Schnittstelle, um eine Alarmnachricht, insbesondere eine kryptografisch geschützte Alarmnachricht zu empfangen. In vorteilhafter Weise verfügt die Ausgabeeinheit (Display, Panel, Monitor) über einen separaten "Integrity-Alarm-Eingang". Ein System zum Überwachen eines aktuellen Integritätszustandes stellt bei einer erkannten Integritätsverletzung eine Alarmnachricht oder ein Schaltsignal bereit. Die Alarmnachricht ist in einer Ausführungsform kryptographisch gegen Manipulation geschützt. Durch die Alarmnachricht wird auf der Ausgabeeinheit ein modifiziertes Anzeigebild dargestellt. Die Alarmnachricht kann beispielsweise Information über die Art der Integritätsverletzung und Herkunft der Alarmnachricht umfassen. Daraus können die Modifikationen des Anzeigebildes entsprechend einer vorgegebenen Integritätszustandsvorgabeinformation abgeleitet werden.

In einer vorteilhaften Ausführungsform kann die Modifikation des Anzeigebildes der Ausgabeeinheit aus einem Hinzufügen eines roten Randes, einem Hinterlegen mit einer Schraffur, oder einem Wechsel in einer Schwarz-/Weiß-Darstellung oder aus einer fahlen Farbdarstellung bestehen. In einer Ausführungsform kann die Art der Modifikation des Anzeigebildes im Integritätsverletzungsfall fest oder projektierbar sein.

In einer vorteilhaften Ausführungsform des Systems ist die Ausgabeeinheit ferner ausgebildet, die Integrität einer Automatisierungskomponente eines verteilten Automatisierungssystems zu überwachen. Insbesondere ist die Ausgabeeinheit ausgebildet, selbst die Integrität einer zugreifenden Automatisierungskomponente zu prüfen ("IMA Attestation", "Network Access Control", "Network Admission Control"). In vorteilhafter Weise ist die Funktionalität zum Überwachen der aktuellen Integrität in der Ausgabeeinheit, beispielsweise auf einem Mikrocontroller, ASIC, FPGA implementiert. Für das Überwachen werden somit keine zusätzlichen Komponenten benötigt.

In einer vorteilhaften Ausführungsform des Systems ist die Ausgabeeinheit ferner ausgebildet, den eigenen Integritätszustand zu überwachen. In vorteilhafter Weise kann die Ausgabeeinheit einen Selbstselbst bzw. eine Selbstüberwachung durchführen ("Device Health Check", "Device Integrity Monitor"). Erkennt die Ausgabeeinheit, dass sie bzw. die Firmware manipuliert ist, kann dies ebenfalls durch eine modifizierte Bildschirmausgabe angezeigt werden.

In einer vorteilhaften Ausführungsform erfolgt das Bereitstellen des Anzeigebildes nicht durch die Ausgabeeinheit selbst, sondern kann alternativ oder zusätzlich durch eine Software-Komponente, beispielsweise durch einen Display-Server bereitgestellt werden. Dieser sendet das Anzeigebild an die Ausgabeeinheit, was beispielsweise auf einem Display dargestellt wird.

Die Erfindung schafft ferner ein Computerprogramm mit Programmcode für das Ausführen eines Verfahrens nach einem der vorherigen Verfahrensansprüche, wenn das Computerprogramm auf einem elektronischen Gerät ausgeführt wird. Das Computerprogramm kann als Signal per Download bereitgestellt oder in einer Speichereinheit einer tragbaren Vorrichtung mit darin enthaltenem computerlesbarem Programmcode gespeichert werden, um ein System zur Ausführung von Anweisungen gemäß dem oben genannten Verfahren zu veranlassen. Die Realisierung der Erfindung durch ein Computerprogrammprodukt hat den Vorteil, dass bereits vorhandene elektronische Geräte, beispielsweise Computer, portable Geräte, Smartphones leicht durch Software-Updates verwendet werden können, um wie von der Erfindung vorgeschlagen, den aktuellen Integritätszustandes eines verteilten Automatisierungssystems, das wenigstens eine Software-Komponente aufweist, zu überwachen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserung oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockdiagramm zur Darstellung eines möglichen Ausführungsbeispiels eines erfindungsgemäßen Systems in einem verteilten Automatisierungssystem;
- Fig. 2: ein Ablaufdiagramm zur Darstellung eines möglichen Ausführungsbeispiels eines erfindungsgemäßen Verfahrens;
- Fig. 3: ein Blockdiagramm zur Darstellung eines Ausführungsbeispiels eines Softwaresystems;
- Fig. 4: ein Blockdiagramm zur Darstellung eines Ausführungsbeispiels einer erfindungsgemäßen Ausgabeeinheit;
- Fig. 5: ein Blockdiagramm zur Darstellung eines weiteren möglichen Ausführungsbeispiels eines erfindungsgemäßen Systems in einem verteilten Automatisierungssystem;
- Fig. 6: ein Blockdiagramm zur Darstellung eines weiteren Ausführungsbeispiels einer erfindungsgemäßen Ausgabeeinheit.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist - jeweils mit denselben Bezugszeichen zu versehen.

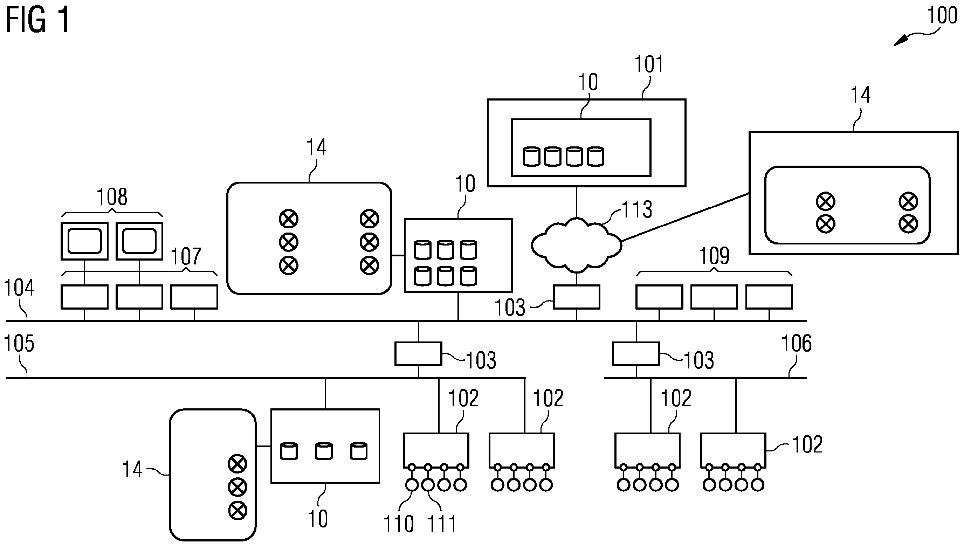

Fig. 1 zeigt ein Blockdiagramm zur Darstellung eines möglichen Ausführungsbeispiels eines erfindungsgemäßen Systems 10 in einem verteilten Automatisierungssystem 100.

In Fig. 1 ist beispielhaft ein Automatisierungssystem 100, beispielsweise ein "Cyber Physical System" dargestellt. Zur Steuerung und Überwachung eines technischen Systems, beispielsweise eine Maschinensteuerung, ein verfahrenstechnischer Prozess, sind mit den Automatisierungskomponenten 102 über wenigstens eine Ein- und Ausgabeschnittstelle wenigstens ein Sensor 110 und wenigstens ein Aktuator 111 direkt mit der Automatisierungskomponente 102 oder remote mit der Automatisierungskomponente 102 verbunden. Jede Automatisierungskomponente kann eine Vielzahl an Sensoren 110 und/oder Aktuatoren 111 aufweisen. Ein SCADA-System 107 ist über das Produktionsnetzwerk 104 mit dem Automatisierungssystem 100 verbunden. Das SCADA-System 107 weist ein Anzeige 108, beispielsweise ein Display, einen Monitor oder ein Panel auf. Das SCADA-System 107 dient zur Überwachung und Steuerung des Steuernetzwerkes 105 der Zone 1 und des Steuernetzwerkes 106 der Zone 2. Das Steuernetzwerk 105 und das Steuernetzwerk 106 sind über Gateways 103 mit dem Produktionsnetzwerk 104 verbunden. Das Produktionsnetzwerk 104 ist über ein Gateway mit einem weiteren Netzwerk 113, beispielsweise dem Internet verbunden.

Das Automatisierungssystem 100 umfasst zudem drei erfindungsgemäße Systeme 10 zum Überwachen eines aktuellen Integritätszustandes. Das erfindungsgemäße System 10 kommuniziert jeweils mit dem Steuernetzwerk 105 der Zone 1, mit dem SCADA-System 107 und ist für das gesamte Automatisierungssystem 100 als Service in einem IoT-Backend 101 implementiert. Das System 10 entspricht somit einem lokalen Integritätsüberwachungssystem, das wenigstens eine, bevorzugt mehrere Integritätszustandsvorgabeinformationen, insbesondere Policies aufweist. Das System 10 kommuniziert mit einer Ausgabeeinheit 300, beispielsweise einem Display, Touch-Display, Monitor. In einer Ausführungsform kommuniziert das System 10 mit einer Ausgabeeinheit 400, beispielsweise einem Panel. Das System 10 umfasst mehrere und verschiedene Integritätszustandsvorgabeinformationen zur Überwachung der Integrität der Automatisierungskomponenten 102 bzw. deren Softwarekomponenten. Auf der Ausgabeeinheit 300 kann der Integritätsstatus über eine modifizierbare Darstellung, beispielsweise "Rot" oder "Grün" dargestellt werden. Beispielsweise kann die Hersteller-Policy, für den Herstellungszustand, die Integrator-Policy und der Site-Acceptance-Test (SAT) überwacht und dargestellt werden. Der SAT stellt den Stand der Komponenten, insbesondere der Softwarekomponenten dar, der bei der Inbetriebnahme abgenommen und "eingefroren" wurde. Entspricht die erfasste Integritätszustandsinformation nicht wenigstens einer der bereitgestellten Integritätszustandsvorgabeinformationen, ist von einer Integritätsverletzung auszugehen, und die Anzeige auf der Ausgabeeinheit 300 kann modifiziert, beispielsweise in "Rot" dargestellt werden. Die Überwachung der Integrität des Automatisierungssystems 100 kann verteilt erfolgen. In Fig. 1 erfolgt die Überwachung der Integrität des Steuernetzwerkes 105 der Zone 1 separat durch das System 10. In einer Ausführungsform kann die Integrität des Steuernetzwerkes 105 der Zone 1, des Steuernetzwerkes 106 der Zone 2 und des SCADA-Systems 107 zusammen über eine Ausgabeeinheit 400, beispielsweise über ein Panel, Tablet, Handheld, Mobiltelefon überwacht werden. Es wird der Integritätszustand der einzelnen Komponenten des Automatisierungssystems 100 dargestellt. Es wird jeweils dargestellt, ob und welche Integritätszustandsvorgabeinformation erfüllt sind. Somit kann beispielsweise ein Maschinenbediener einer Maschine (nicht dargestellt) des Steuernetzwerkes 105 der Zone 1, oder Überwachungspersonal am SCADA-System, oder ein Remote-Nutzer (z.B. ein Werksleiter oder Sicherheitschef der Automatisierungsanlage über die Ausgabeeinheit 400, z.B. ein Panel, Tablet, Smartphone) den aktuellen Systemintegritätsstatus abfragen. In einer Ausführungsform kann die Überwachung des Integritätszustandes über ein mit einem Netzwerk 113 verbundenes I-oT-Backend 101 ausgelagert auf Server oder einem Serververbund in einer Cloud erfolgen. Ebenso kann die Überwachung des Integritätszustandes auf einem Edge-Cloud-Server realisiert sein (nicht dargestellt). In einer Ausführungsform kann der Integritätszustand in einem Leitstand bzw. Kontrollzentrum mittels der Anzeige 108 überwacht werden. Die Ausgabeeinheit 300, 400 empfängt von dem System 10 die Systemintegritätszustandsinformation, die entsprechend dem Integritätsvergleichsergebnis modifiziert dargestellt werden kann. In einer Ausführungsform empfängt die Ausgabeeinheit 300, 400 von dem System 10 eine Alarmnachricht entsprechend des überwachten aktuellen Integritätszustandes, die eine Modifikation der Anzeige der Ausgabeeinheit 300, 400 bewirkt. In einer Ausführungsform kann die Ausgabeeinheit 300, 400 die Integrität der Automatisierungskomponenten 102 des verteilten Automatisierungssystems 100 überwachen und entsprechend darstellen. In einer weiteren Ausführungsform kann das System 10 zur Überwachung der Integrität und die Ausgabeeinheit 300 als ein Computer oder Laptop ausgebildet sein.

Das Automatisierungssystem 100 ist zudem mit wenigstens einem weiteren Server 109 über das Produktionsnetzwerk 104 verbunden. Die Server 109 können beispielsweise einen Kommunikationsserver, ein Produktionsplanungssystem und einen Log-Server umfassen. Die Integrität der Server 109 kann über das System 10 überwacht werden.

In einer Ausführungsform überwacht das System 10 die Integritätszustandsvorgabeinformationen, die eine Mehrzahl oder Vielzahl an Regeln (Policy), aber wenigstens zwei Regeln, beispielsweise Regel A, B und C umfasst. Durch das Überwachen des Integritätszustandes kann festgestellt werden, welche Regel A, B, C betroffen ist. In einer Ausführungsform kann die Regel A die von einem Hersteller bereitgestellten Binärdaten umfassen, die Regel B betrifft das Betriebssystem, z.B. Windows, Linux, und wird zur Überwachung verwendet, ob eine Integritätsverletzung des Betriebssystems vorliegt. Die Regel C kann so eingerichtet sein, dass die Projektierungsdaten der Automatisierungskomponente 102 überwacht werden. Die genannten Regeln stellen nur eine beispielhafte Aufzählung dar und sind nicht auf diese beschränkt. Vielmehr können weitere und unterschiedlichere Regeln zur Überwachung der Integrität definiert werden. Die Regeln A, B, C können unabhängig voneinander überwacht werden und eine Integritätsverletzung einer Regel A, B, C kann einem Anwender angezeigt werden. Insbesondere kann einem Anwender angezeigt werden, für welche Regel A, B, C eine Integritätsverletzung vorliegt bzw. für welche Regel A, B, C die Integrität verletzt wurde. Beispielsweise kann das Betriebssystem überprüft werden und bei einem Nichtvorliegen einer Integritätsverletzung, kann die entsprechende Regel in "Grün" auf einer Ausgabeeinheit 300, 400 dargestellt werden. Eine zweite Ausgabe stellt die Binärdateien (z.B. Programmbinärdateien, Softwarebibliotheken) eines SCADA-Systems (z.B. WinCC) dar, dass bei Integrität auch in "Grün" dargestellt wird und eine weitere Ausgabe für die Projektierungsdaten wird in "Grün" dargestellt, wenn keine Integritätsverletzung vorliegt. Wird eine Integritätsverletzung erkannt, kann die entsprechende Regel in "Rot" dargestellt werden und ein Anwender hat die Kenntnis, welche Regel manipuliert wurde bzw. welche überwachte Komponente nicht mehr vertrauenswürdig ist. Zudem erhält der Anwender die Information, dass die weiteren definierten Regeln nicht betroffen bzw. manipuliert wurden sind. Die Darstellung in "Rot" und "Grün" ist nur eine beispielhaft gewählte Darstellungsvariante und stellt keine Einschränkung dar. Vielmehr können weitere und/oder andere Darstellungsvarianten gewählt werden.

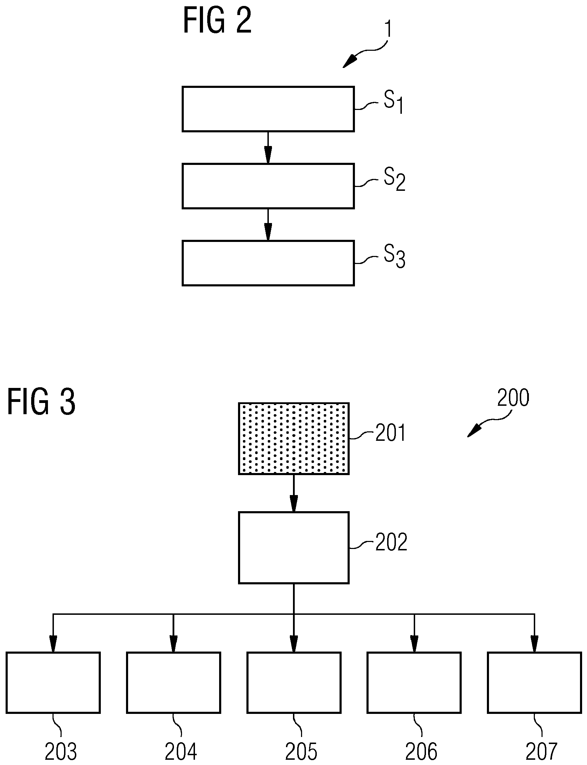

Fig. 2 zeigt ein Ablaufdiagramm zur Darstellung eines möglichen Ausführungsbeispiels eines erfindungsgemäßen Verfahrens 1.

Das Verfahren 1 umfasst bei dem dargestellten Ausführungsbeispiel mehrere Schritte. In einem ersten Schritt S1 werden durch ein System 10 (siehe Fig. 1) wenigstens eine Integritätszustandsinformation der Automatisierungskomponente 102 (siehe Fig. 1) des verteilten Automatisierungssystems 100 (siehe Fig. 1) erfasst.

In einem zweiten Schritt S2 werden die erfassten Integritätszustandsinformationen der Automatisierungskomponente 102 mit wenigstens einer bereitgestellten Integritätszustandsvorgabeinformation für die Automatisierungskomponente 102 verglichen.

In einem dritten Schritt S3 werden der aktuelle Integritätszustand der Automatisierungskomponente 102 des verteilten Automatisierungssystems 100 basierend auf dem Integritätsvergleichsergebnisses des Vergleichsschrittes S2 überwacht.

In einem weiteren Schritt kann eine Systemintegritätszustandsinformation des verteilten Automatisierungssystems 100 bereitgestellt werden. Die Systemintegritätszustandsinformation umfasst die Integritätsvergleichsergebnisse für alle Automatisierungskomponenten 102 des Automatisierungssystems. Die bereitgestellte Systemintegritätszustandsinformation kann kryptografisch geschützt übertragen und in einem Speichermedium gespeichert werden.

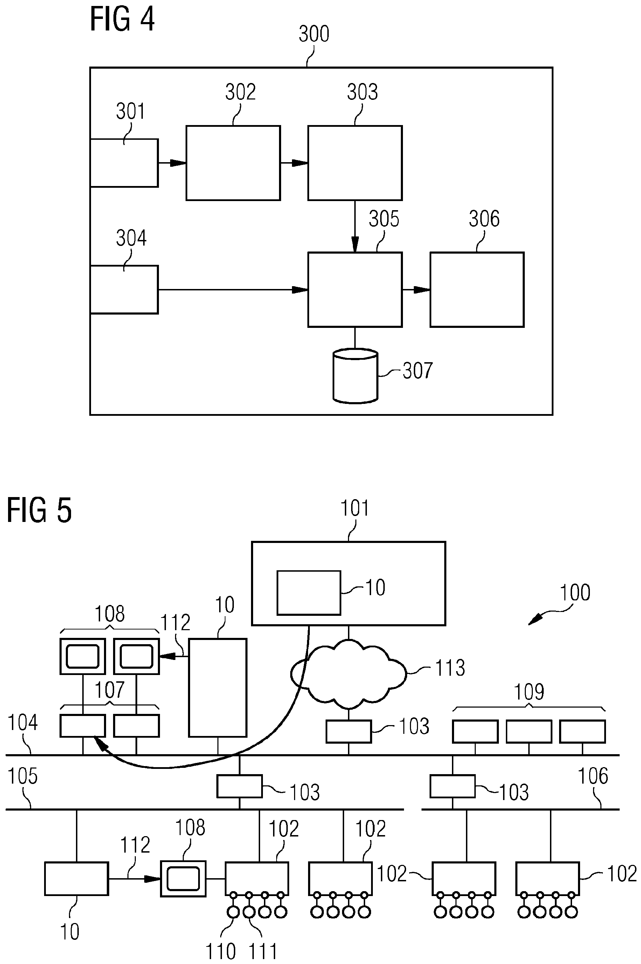

Zudem kann eine Alarmnachricht 112 (siehe Fig. 5) entsprechend des überwachten aktuellen Integritätszustandes der Automatisierungskomponente 102 des verteilten Automatisierungssystems 100 bereitgestellt werden.

Fig. 3 zeigt ein Blockdiagramm zur Darstellung eines Ausführungsbeispiels eines Softwaresystems 200.

In der Fig. 3 ist beispielshaft ein Ausführungsbeispiel für ein Softwaresystem 200, beispielsweise ein SCADA-System dargestellt. Das Softwaresystem 200 kann mehrere Betriebssystemdienste und Applikationen, die auf einem System laufen, im Allgemeinen jedoch verteilt auf mehreren Systemen laufen, umfassen. Das Softwaresystem 200 umfasst eine "Start Application" 202 zum Ausführen weiterer Software-Programme (Manager)und kann beispielsweise auf ihren Integritätszustand überwacht werden. Insbesondere kann überwacht werden, ob die Applikationen des Softwaresystems 200 entsprechend ihrer vorgesehenen Funktionalität arbeiteten, ob entsprechende Binaries richtig herangezogen werden, ob die Positionierungsdaten, z.B. ein Dateipfad und/oder eine Prozess-Struktur und/oder der Rechner, auf dem ein Binary ausgeführt wird, korrekt sind und ob die entstehenden Daten während der Laufzeit die richtigen Zugriffsrechte haben. Das Softwaresystem 200 weist weitere Unterkomponenten auf, die einzeln auf ihre Integrität überwacht werden können. Die "Start Application" startet beispielsweise die Unterkomponenten "Data Manager Application" 203, "Event Handler Application" 204, "Graphics Runtime Application" 205, "OPC UA Server" 206 und "Communication Driver" 207. Diese Unterkomponenten werden überwacht. Bei der Integritätsprüfung kann verifiziert werden, welche Software-komponente des Softwaresystems 200 auf welchem System läuft, wie die Softwarekomponente beispielsweise gestartet wurde (z.B. von welcher anderen Softwarekomponente, von Kommandozeile, über "sudo"). Zudem kann verifiziert werden, welche Netzwerkverbindung zu welcher Softwarekomponente auf anderen Systemen aufgebaut und aufrechtgehalten wird (z.B. Ports, Protokolle) und unter welchem Nutzer die Netzwerkverbindung aufgebaut wurde und aufrecht gehalten wird. Das Softwaresystem 200 umfasst ferner eine "Support Service" Applikation 201, die entsprechende Projektierungsdaten für das Softwaresystem 200 empfängt und bereitstellt. Diese werden an die "Startup Applicaton" 202 übergeben. Auf Basis der Projektierungsdaten werden durch die "Startup Application" 202 die entsprechenden weiteren Komponenten 203, 204, 205, 206, 207 geladen und gestartet. Die Projektierungsdaten können über Netzwerkverbindungen verteilt gespeichert werden.

Fig. 4 zeigt ein Blockdiagramm zur Darstellung eines Ausführungsbeispiels einer erfindungsgemäßen Ausgabeeinheit 300.

In Fig. 4 bezeichnet Bezugszeichen 300 eine Ausgabeeinheit, die ausgebildet ist, einen aktuellen Integritätszustand einer Automatisierungskomponente 102 (siehe Fig. 1) eines verteilten Automatisierungssystems 100 (siehe Fig. 1) darzustellen. Die Ausgabeeinheit 300 zeigt an, welche Integritätsvorgabeinformationen erfüllt oder nicht erfüllt werden. In vorteilhafter Weise kann durch die Ausgabeeinheit 300 eine granulare Systemintegritätszustandsinformation bereitgestellt werden, die aber dennoch von einem Anwender in der industriellen Umgebung interpretierbar ist. Insbesondere kann angezeigt werden, welcher jeweilige Aspekt einer Automatisierungskomponente 102 einer Integritätsverletzung unterliegt. Diesbezüglich können durch einen Anwender entsprechende Handlungsanweisungen vorgenommen werden. In einer Ausführungsform kann die Ausgabeeinheit 300 als ein Display oder ein Touch-Display für gesteuerte Eingaben und zur Auswahl von Ansichten, beispielsweise in einem Menü, ausgebildet sein. In einer weiteren Ausführungsform kann die Ausgabeeinheit 300 als ein Bildschirm ausgebildet sein.

Die Ausgabeeinheit 300 umfasst einen Videoeingang 301, über den Systeminformation bzw. Informationen über das Automatisierungssystem 100, beispielsweise aktuelle Zustände der Automatisierungskomponenten empfangen werden können, die auf dem LCD 306 angezeigt werden. Zudem umfasst die Ausgabeeinheit 300 einen Videoprozessor 302, einen Bildspeicher 303, einen Bildmodifizierer 305. Der Bildmodifizierer 305 kommuniziert mit einer Schnittstelle 304, dem Bildspeicher 303 und dem LCD 306. Über den Bildspeicher 303 werden die anzuzeigenden Systeminformationen an den Bildmodifizierer 305 übergeben. Die Schnittstelle 304 ist ausgebildet, eine Alarmnachricht 112 (siehe Fig. 5) zu empfangen. In Abhängigkeit der empfangenen Alarmnachricht 112 werden die anzuzeigenden Systeminformationen in dem Bildspeicher 303 gemäß einer festen oder vorgebbaren Modifizierungsregel modifiziert auf dem LCD 306 der Ausgabeeinheit 300 dargestellt. In einer Ausführungsform ist die über die Schnittstelle 304 empfangene Alarmnachricht 112 kryptografisch geschützt.

In einer Ausführungsform kann die Modifikation der Anzeige der Ausgabeeinheit 300 aus einem Hinzufügen eines Randes, einem Hinterlegen mit einer Schraffur, oder einem Wechsel in eine Schwarz-/Weiß-Darstellung oder einer fahlen Farbdarstellung bestehen. Die Art der Modifikation im Integritätsverletzungsfall kann fest oder projektier bar sein. Die Modifikation der Anzeige kann in einer Ausführungsform durch den Bildmodifizierer 305 auf Basis der Modifizierungsregeleinheit 307 angepasst werden. In einer Ausführungsform können unterschiedliche Arten der Integritätsverletzung unterschieden werden. Beispielsweise kann die Ausgabeeinheit 300 in Abhängigkeit eines Schweregrades der Integritätsverletzung oder der betroffenen Komponenten unterschiedlich modifiziert werden. In einer Ausführungsform wird die erfasste Integritätszustandsinformation bei einer Übereinstimmung mit der bereitgestellten Integritätszustandsvorgabeinformation in grün dargestellt. Im Fall einer Integritätsverletzung können Integritätszustandsinformation gelb oder rot dargestellt werden. Zudem können die betroffenen Anzeigebereiche oder Komponenten entsprechend farblich dargestellt werden. In einer Ausführungsform können auch die Integritätsverletzung der Integritätszustandsvorgabeinformationen dargestellt werden.

Die Ausgabeeinheit 300 hat den Vorteil, dass die Systeminformationen oder die Anzeige für eine Maschine oder eines Leitstandes, beispielsweise ein SCADA-System Leitstand verfügbar bleiben. In vorteilhafter Weise bekommt ein Anwender die Information, dass eine Integritätsverletzung vorliegt und er sich auf die Anzeige eventuell nicht mehr verlassen kann und/oder sollte, d.h. dass die dargestellten Informationen fehlerhaft sein könnten. Insbesondere kann die Ausgabeeinheit 300 eines verteilten/vernetzten Automatisierungssystems 100, beispielsweise eines cyber-physischen Systems angepasst werden, wenn eine Integritätsverletzung einer oder mehrere Automatisierungskomponenten 102 des cyber-physischen Systems erkannt werden. Dadurch wird einem Anwender klar ersichtlich, ob eine Ausgabeeinheit 300 eventuell nicht vertrauenswürdig ist, d.h. eventuell nicht die tatsächliche Situation des cyber-physischen Systems wiedergibt. Es können aber dennoch die Systeminformationen ausgegeben werden, d.h. die Ausgabeeinheit 300 wird nicht deaktiviert, da ansonsten keine Information über das technische cyber-physische System mehr vorliegen würde. Insbesondere kann es sich dabei um ein SCADA-System, einen Leitstand oder ein Maschinenbediengerät handeln.

Fig. 5 zeigt ein Blockdiagramm zur Darstellung eines weiteren möglichen Ausführungsbeispiels eines erfindungsgemäßen Systems 10 in einem verteilten Automatisierungssystem 100.

In Fig. 5 bezeichnet das Bezugszeichen 100 ein Automatisierungssystem, insbesondere eine verteiltes Automatisierungssystem, beispielsweise ein "Cyber Physical System" zur Steuerung und Überwachung eines technischen Systems (z.B. eine Maschinensteuerung, einen verfahrenstechnischen Prozess). Mit den Automatisierungskomponenten 102 des Automatisierungssystems 100 sind über eine Ein- und Ausgabeschnittstelle (nicht dargestellt) Sensoren 110 und Aktuatoren 111 direkt oder über Remote verbunden. Es sind Systeme 10 zur Überwachung der Systemintegrität vorgesehen. Die Systeme 10 sind in der Fig. 5 als separate Komponenten dargestellt, können aber auch in anderen Komponenten, z.B. in einer Automatisierungskomponente 102, in einem SCADA-Server 107 oder einem Gateway 103, beispielsweise auf einem Mikrocontroller, ASIC, FPGA implementiert werden.

Bei einer erkannten Integritätsverletzung in dem Automatisierungssystem 100 wird durch ein System 10 eine Alarmnachricht 112 an eine Anzeige 108 übertragen. In einer Ausführungsform kann die Alarmnachricht 112 an eine Ausgabeeinheit 300, 400 übertragen werden. Durch das Empfangen der Alarmnachricht 112 kann die Ausgabeeinheit 300, 400 derart modifiziert werden, dass ersichtlich ist, dass eine Integritätsverletzung innerhalb des Automatisierungssystems 100 vorliegt und somit die angezeigten Systeminformationen des Automatisierungssystem 100 nicht vertrauenswürdig sind. Die Darstellung der Systeminformationen des Automatisierungssystems 100 wird fortgeführt, um z.B. eine Überwachung einer Anlage dem Anlagenbediener weiter zu ermöglichen.

In einer weiteren Ausführungsform kann der Dienst bzw. das System zur Überwachung der Systemintegrität in einem IoT-Backend 101 implementiert werden. Dieses System oder entsprechend weitere Systeme (z.B. System Integrity Monitoring Einheit) kann eine Alarmnachricht 112 einem Display (nicht dargestellt) oder einer Rendering-Komponente eines SCADA-Systems bereitgestellt.

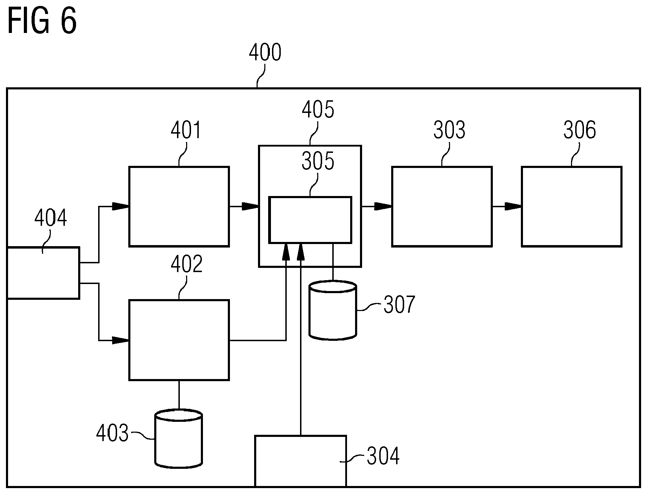

Fig. 6 zeigt ein Blockdiagramm zur Darstellung eines weiteren Ausführungsbeispiels einer erfindungsgemäßen Ausgabeeinheit 400.

In Fig. 6 bezeichnet Bezugszeichen 400 eine weitere Ausführungsform einer Ausgabeeinheit, die ausgebildet ist, einen aktuellen Integritätszustand einer Automatisierungskomponente 102 (siehe Fig. 1) eines verteilten Automatisierungssystems 100 (siehe Fig. 1) darzustellen. Die Ausgabeeinheit 400 kann anzeigen welche Integritätsvorgabeinformationen erfüllt werden oder nicht. In vorteilhafter Weise kann durch die Ausgabeeinheit 400 eine granulare Systemintegritätszustandsinformation bereitgestellt werden, die aber dennoch von einem Anwender in der industriellen Umgebung interpretierbar ist. Insbesondere kann angezeigt werden, welcher jeweilige Aspekt einer Automatisierungskomponente 102 einer Integritätsverletzung unterliegt. Die Ausgabeeinheit 400 ist als ein Panel ausgebildet.

Die Ausgabeeinheit 400 umfasst die Elemente der Ausgabeeinheit 300. Zudem umfasst die Ausgabeeinheit 400 einen Display Server 401 der mit einer Netzwerkschnittstelle 404 und einem Display Treiber 405 kommuniziert. In dem Display Treiber 405 ist der Bildmodifizierer 305 implementiert. Der Bildmodifizierer 305 kommuniziert mit einem NAC-Server 402 ("Network Access Control"-Server), der Modifizierungsregeleinheit 307 und der Schnittstelle 304. Der NAC-Server 402 kommuniziert mit einer NAC-Policy-Einheit 403. Der NAC-Server 402 und die NAC-Policy-Einheit bilden eine Netzwerkzugangskontrolle aus, die die Abwehr von Viren, Trojanern und/oder unautorisierten Zugriffen aus dem Netzwerk heraus unterstützt. Mit der Netzwerkzugangskontrolle können im Allgemeinen Endgeräte während der Authentifizierung auf Richtlinienkonformität geprüft werden. Ist beispielsweise der Virenscanner nicht aktuell oder fehlen neuste Security-Patches, kann das betroffene Endgerät unter Quarantäne gestellt werden, bis es wieder den geltenden Sicherheitsrichtlinien entspricht.

Die Ausgabeeinheit 400 ist als ein Panel ausgebildet, dass über die Netzwerkschnittstelle 404, beispielsweise von einem SCADA-Server angesprochen werden kann. Es wird das darzustellende Bild über ein Netzwerk, mit dem das Panel über die Netzwerkschnittstelle 404 verbunden ist, übertragen. Das übertragene Bild wird über den Display Treiber 405 und einen Bildspeicher 303 auf einem LCD 306 dargestellt. Das Panel verfügt über die Netzwerkzugangskontrolle zur Prüfung der Integrität eines zugreifenden Systems (z.B. Report eines NAC-Agents, Trusted Platform Module (TPM) -Attestierung, IMA-Attestierung), sowie über die Schnittstelle 304 zum Empfang der Alarmnachricht 112 (siehe Fig. 5). Bei einer bekannten Integritätsabweichung wird das empfangene Bild, über den Bildmodifizierer 305 entsprechend der Modifizierungsregel-Einheit 307 modifiziert und auf dem LCD 306 angezeigt. In Abhängigkeit der empfangenen Alarmnachricht 112 werden die anzuzeigenden Systeminformationen in dem Display Treiber 405 gemäß einer festen oder vorgebbaren Modifizierungsregel der Modifizierungsregel-Einheit 307 modifiziert und an den Bildspeicher 303 übergeben. Dieser stellt das modifizierte Bild auf dem LCD 306 der Ausgabeeinheit 400 dar. In einer Ausführungsform ist die über die Schnittstelle 304 empfangene Alarmnachricht 112 kryptografisch geschützt. Beispielsweise kann die Schnittstelle 304 die Alarmnachricht 112 über das Transmission Control Protocol/Internet Protocol (TCP/IP) empfangen und ist über die "Transport Security Layer" (TLS) kryptografisch geschützt. Das Panel ist somit gegen Manipulation durch das System 10 oder die Automatisierungskomponente 102, deren Integrität überwacht wird, geschützt.

Die Ausgabeeinheit 400 hat den Vorteil, dass die Systeminformationen oder die Anzeige für eine Maschine oder eines Leitstandes, beispielsweise ein SCADA-System Leitstand verfügbar bleiben. In vorteilhafter Weise bekommt ein Anwender die Information, dass eine Integritätsverletzung vorliegt und er sich auf die Anzeige eventuell nicht mehr verlassen kann und/oder sollte, d.h. dass die dargestellten Informationen fehlerhaft sein könnten. Insbesondere kann die Ausgabeeinheit 400 eines verteilten/vernetzten Automatisierungssystems 100, beispielsweise eines cyber-physischen Systems angepasst werden, wenn eine Integritätsverletzung einer oder mehrere Automatisierungskomponenten 102 des cyber-physischen Systems erkannt werden. Dadurch wird einem Anwender klar ersichtlich, ob eine Ausgabeeinheit 400 eventuell nicht vertrauenswürdig ist, d.h. eventuell nicht die tatsächliche Situation des cyber-physischen Systems wiedergibt. Es können aber dennoch die Systeminformationen ausgegeben werden, d.h. die Ausgabeeinheit 400 wird nicht deaktiviert, da ansonsten keine Information über das technische cyber-physische System mehr vorliegen würde. Insbesondere kann es sich dabei um ein SCADA-System, einen Leitstand oder ein Maschinenbediengerät handeln.

In einer Ausführungsform ist die Ausgabeeinheit 400 ausgebildet, den Integritätszustand einer Automatisierungskomponente 102 (siehe Fig. 5) zu überwachen. Es erfolgt eine Überwachung des Integritätszustandes der über die Netzwerkschnittstelle 404 verbundenen Automatisierungskomponente 102. Über die Ausgabeeinheit 400 werden die allgemeinen Systeminformationen der Automatisierungskomponente 102 angezeigt. Über den NAC-Server 402 wird der Integritätszustand der verbundenen Automatisierungskomponente 102 überwacht und bei einer Integritätsverletzung werden die Systeminformationen der Automatisierungskomponente 102 entsprechend modifiziert angezeigt. Zudem kann das angezeigt Bild zum Darstellen einer Integritätsverletzung modifiziert dargestellt werden.

### Zusammenfassung der Erfindung

Zusammenfassend betrifft die vorliegende Erfindung ein Verfahren und ein System zum Überwachen eines aktuellen Integritätszustandes eines verteilten Automatisierungssystems. Das Automatisierungssystem umfasst wenigstens eine Automatisierungskomponente. Zum Bestimmen des Integritätszustandes wird die Integritätszustandsinformation einer Automatisierungskomponente bestimmt und mit einer Integritätszustandsvorgabeinformation verglichen. Es ist möglich, die bestimmte Integritätszustandsinformation einer Automatisierungskomponente mit einer Mehrzahl von Integritätszustandsvorgabeinformation zu vergleichen und eine Information davon abhängig bereitzustellen, welche der Mehrzahl von Integritätszustandsvorgabeinformationen erfüllt sind. Es wird eine Systemintegritätszustandsinformation bereitgestellt, die die Integritätsvergleichsergebnisse umfasst, die auf einer Ausgabeeinheit entsprechend dem Integritätszustand modifiziert dargestellt werden können. Zudem kann eine Alarmnachricht bereitgestellt werden, die die Anzeige einer Ausgabeeinheit entsprechend des Integritätszustandes modifiziert.

Diesbezüglich kann eine spezifische Integritätsüberwachung des verteilten Automatisierungssystems einem Anwender bereitgestellt werden. Zudem erhält der Anwender die Information, wo die Integritätsverletzung im verteilten Automatisierungssystem eingetreten ist. Zudem erhält der Anwender die Information, dass die auf einer Ausgabeeinheit dargestellten Informationen evtl. nicht mehr vertrauenswürdig sind.

## Patentansprüche

1. Verfahren (1) zum Überwachen eines aktuellen Integritätszustandes eines verteilten Automatisierungssystems (100), das wenigstens eine Automatisierungskomponente (102) aufweist, mit den Schritten:
- Erfassen (S1) wenigstens einer Integritätszustandsinformation der wenigstens einen Automatisierungskomponente (102) des verteilten Automatisierungssystems (100);
- Vergleichen (S2) der erfassten Integritätszustandsinformation der wenigstens einen Automatisierungskomponente (102) mit wenigstens einer bereitgestellten Integritätszustandsvorgabeinformation für die wenigstens eine Automatisierungskomponente (102); und
- Überwachen (S3) des aktuellen Integritätszustandes der wenigstens einen Automatisierungskomponente (102) des verteilten Automatisierungssystems (100) basierend auf dem Integritätsvergleichsergebnisses des Vergleichsschrittes (S2).

2. Verfahren nach Anspruch 1, wobei das verteilte Automatisierungssystem (100) ein SCADA-System umfasst.

3. Verfahren (1) nach einem der vorhergehenden Ansprüche, wobei in einem weiteren Schritt eine Systemintegritätszustandsinformation des verteilten Automatisierungssystems (100) bereitgestellt wird, die die Integritätsvergleichsergebnisse für alle Automatisierungskomponenten (102) des Automatisierungssystems (100) umfasst.

4. Verfahren (1) nach Anspruch 3, wobei die bereitgestellte Systemintegritätszustandsinformation kryptografisch geschützt übertragen wird.

5. Verfahren (1) nach einem der vorhergehenden Ansprüche 3 und 4, wobei die Systemintegritätszustandsinformation in einem Speichermedium gespeichert wird.

6. Verfahren (1) nach einem der vorhergehenden Ansprüche 3 bis 5, wobei eine Alarmnachricht entsprechend des überwachten aktuellen Integritätszustandes der Automatisierungskomponente (102) des verteilten Automatisierungssystems (100) bereitgestellt wird.

7. Verfahren (1) nach einem der vorhergehenden Ansprüche 3 bis 5, wobei eine automatische Reaktion entsprechend des überwachten aktuellen Integritätszustandes der Automatisierungskomponente (102) des verteilten Automatisierungssystems (100) bereitgestellt wird, umfassend:
- einen Neustart der Automatisierungskomponente (102);
- einen Not-Aus der Automatisierungskomponente (102) oder des verteilten Automatisierungssystems (100);
- Aktivieren eines visuellen und/oder akustischen Alarmsignals; und/oder
- Zurücksetzen der Automatisierungskomponente (102).

8. Verfahren (1) nach einem der vorhergehenden Ansprüche, wobei die bereitgestellte Integritätszustandsvorgabeinformation der Automatisierungskomponente (102) unterschiedliche Lebenszyklen aufweist.

9. Verfahren (1) nach einem der vorhergehenden Ansprüche, wobei die bereitgestellte Integritätszustandsvorgabeinformation eine Vielzahl an Regeln umfasst.

10. Verfahren (1) nach Anspruch 9, wobei die Regeln wenigstens umfassen:
- eine Automatisierungskomponentenversion;
- Konfigurationsdaten der Automatisierungskomponenten (102); und/oder
- Mindestanforderungen an einen Sicherheitslevel.

11. Verfahren (1) nach einem der vorhergehenden Ansprüche, wobei die bereitgestellte Integritätszustandsvorgabeinformation:
- wenigstens teilweise fest vorgebbar ist;
- konfigurierbar ist, und/oder
- durch ein angelerntes Modell bereitgestellt wird.

12. Verfahren (1) nach einem der vorhergehenden Ansprüche, wobei der Integritätszustand von installierten Automatisierungskomponenten (102) und/oder von ausgeführten Automatisierungskomponenten (102) des verteilten Automatisierungssystems (100) während der Laufzeit detektiert wird.

13. Verfahren (1) nach einem der vorhergehenden Ansprüche, wobei der Integritätszustand des verteilten Automatisierungssystems (100) manuell, automatisch oder periodisch detektiert wird.

14. System (10) zum Überwachen eines aktuellen Integritätszustandes eines verteilten Automatisierungssystems (100), das wenigstens eine Automatisierungskomponente (102) aufweist, umfassend:
- eine Erfassungseinheit (11), die ausgebildet ist, wenigstens eine Integritätszustandsinformation der Automatisierungskomponente (102) des verteilten Automatisierungssystems (100) zu erfassen;
- eine Vergleichseinheit (12), die ausgebildet ist, die erfasste Integritätszustandsinformation der Automatisierungskomponente (102) mit wenigstens einer bereitgestellten Integritätszustandsvorgabeinformation für die Automatisierungskomponente (102) zu vergleichen, und
- eine Überwachungseinheit (13), die ausgebildet ist, den aktuellen Integritätszustand der Automatisierungskomponente (102) des verteilten Automatisierungssystems (100) basierend auf dem Integritätsvergleichsergebnisses der Vergleichseinheit zu überwachen.

15. System (10) nach Anspruch 14, wobei das System eine Ausgabeeinheit (300, 400) umfasst, die ausgebildet ist, den aktuellen Integritätszustand der Automatisierungskomponente (102) des verteilten Automatisierungssystems (100) bereitzustellen.

16. System (10) nach Anspruch 15, wobei die Ausgabeeinheit (300, 400) ferner ausgebildet ist, Systeminformationen des verteilten Automatisierungssystems (100) entsprechend dem empfangenen aktuellen Integritätszustand der Automatisierungskomponente (102) modifiziert bereitzustellen.

17. System (10) nach Anspruch 15, wobei die Ausgabeeinheit (300, 400) eine Schnittstelle (304) umfasst, um eine Alarmnachricht (112), insbesondere eine kryptografisch geschützte Alarmnachricht (112) zu empfangen.

18. System (10) nach einem der vorhergehenden Ansprüche 15 bis 17, wobei die Ausgabeeinheit (300, 400) ferner ausgebildet ist, die Integrität einer Automatisierungskomponente (102) eines verteilten Automatisierungssystems (100) zu überwachen.

19. System (10) nach einem der vorhergehenden Ansprüche 15 bis 17, wobei die Ausgabeeinheit (300, 400) ferner ausgebildet ist, den eigenen Integritätszustand zu überwachen.

20. Computerprogramm mit Programmcode für das Ausführen eines Verfahrens (1) nach einem der Verfahrensansprüche, wenn das Computerprogramm auf einem elektronischen Gerät ausgeführt wird.
